# EUROPÄISCHE PATENTANMELDUNG

(11) **EP 1 118 478 A2**
(43) Veröffentlichungstag der Anmeldung: **25.07.2001**
(21) Anmeldenummer: 00126563.6
(22) Anmeldetag: 12.12.2000
(51) Int. Cl.: B60G 3/26, B60G 7/00, B62D 17/00

(54) **Fahrzeugeinzelradaufhängung**

(30) Priorität: 19.01.2000 DE 10001985
(71) Anmelder: Volkswagen Aktiengesellschaft, 38436 Wolfsburg (DE)
(72) Erfinder: Winter, Ingo, Dipl.-Ing., 38550 Isenbüttel (DE)

(57) **Zusammenfassung**

Eine Fahrzeugeinzelradaufhängung umfaßt einen Längslenker (1) mit einem Radlager (4), der mit einem ersten, vorderen Ende fahrzeugseitig über ein elastisches Lager schwenkbar abgestützt ist, und einen Querlenker (2), der in überwiegend vertikaler Ausrichtung zur Abstützung eines Sturzmomentes an zumindest zwei voneinander beabstandeten Punkten entlang einer Achse (A) mit dem Längslenker (1) verbunden ist. Zur Schaffung einer Einzelradaufhängung, die bei einer kompakten Bauweise einen hohen Fahrkomfort unter Beibehaltung einer eingestellten Vorspureinstellung erlaubt, ist der Längslenker (1) in Querrichtung biegeweich, in Vertikalrichtung hingegen biegesteif ausgebildet, und weiterhin mit einer Spurstange (3) verbunden, die ihrerseits mit einem anderen Ende an dem Fahrzeugaufbau abgestützt ist.

## Beschreibung

Die Erfindung betrifft eine Fahrzeugeinzelradaufhängung, umfassend einen Längslenker mit einem Radlager, der mit einem ersten, vorderen Ende über ein elastisches Lager schwenkbar an einem Fahrzeugaufbau abgestützt ist, und einen Querlenker, der in überwiegend vertikaler Ausrichtung zur Abstützung eines Sturzmomentes an zumindest zwei voneinander beabstandeten Punkten entlang einer Achse mit dem Längslenker verbunden ist.

Derartige Radaufhängungen eignen sich besonders für die Aufhängung der Hinterräder von Personenkraftwagen.

Eine Fahrzeugeinzelradaufhängung der eingangs genannten Art ist aus der EP 0 691 225 A1 bekannt. Insbesondere offenbart die EP 0 691 225 A1 einen radführenden Längslenker, der fest mit einem Radträger verbunden ist, wobei der Längslenker mit seinem frontseitigen Ende über ein elastisches Lager schwenkbar an einem Fahrzeugaufbau angekoppelt ist. Der Längslenker ist hierbei biege- und drehsteif ausgeführt. Weiterhin ist ein Querlenker über zwei voneinander beabstandete Gummi-Metall-Lager an dem Radträger angekoppelt. In einer Ausführungsform erfolgt die Ankopplung des Querlenkers an den Radträger unter Verwendung eines Scharniergelenkes mit einer sich im wesentlichen in Vertikalrichtung erstreckenden Schwenkachse. Diese Einzelradaufhängung ermöglicht bereits eine kompakte Bauweise und erlaubt ein gezieltes Einstellen des Eigenlenkverhaltens beim Bremsen oder beim Durchfahren einer Kurve durch eine erwünschte Vorspurbeeinflussung, beispielsweise durch eine Auslegung der Lagernachgiebigkeiten der Lenker. Neben der erwünschten Vorspurbeeinflussung können jedoch beispielsweise durch ein ungleichmäßiges Federn der Längslenker einer Achse unerwünschte Spurbeeinflussungen und damit unerwünschte Eigenlenkeffekte auftreten.

Aus der DE 1 430 793 A ist eine weitere Einzelradaufhängung für eine angetriebene Hinterradachse bekannt, bei der die Abstützung eines Rades über ein Radlager unmittelbar an einem Längslenker erfolgt, der unter Zwischenschaltung eines elastischen Gummielementes an einem Fahrzeugaufbau gelagert ist. Dabei ist der Längslenker drehelastisch und in Querrichtung biegeelastisch ausgebildet. Die Ankopplung eines Querlenkers erfolgt über ein Gelenk, das unterhalb des Radlagers angeordnet ist und dessen Drehachse im wesentlichen horizontal angeordnet ist. Eine Sturzmomentabstützung ist damit nicht möglich, so daß weitere Lenker notwendig sind. Zudem benötigt die Anbindung des Querlenkers an den Längslenker verhältnismäßig viel Raum.

Schließlich ist aus der DE 36 34 090 A1 eine Kraftfahrzeughinterachse bekannt, bei der wiederum biege- und torsionssteife Längslenker eingesetzt werden. Diese Längslenker sind an ihrem rückseitigen Ende über einen gemeinsamen Querlenker untereinander gekoppelt und durch diesen gegenüber einem Fahrzeugaufbau abgestützt, um bei einem Längsfedern der Hinterräder unerwünschte Eigenlenkbewegungen zu vermindern. Die Kopplung der Querlenker untereinander bedeutet jedoch eine komplizierte Abstützung gegenüber dem Fahrzeugaufbau, die verhältnismäßig viel Bauraum beansprucht und das Fahrzeuggewicht erhöht. Die Verbindung der Längslenker mit dem Querlenker erfolgt jeweils über ein Gelenk mit einer im wesentlichen vertikalen Schwenkachse.

Der Erfindung liegt demgegenüber die Aufgabe zugrunde, eine Einzelradaufhängung zu schaffen, die bei einer kompakten Bauweise einen hohen Fahrkomfort unter Beibehaltung einer situationsbezogen eingestellten Vorspureinstellung erlaubt.

Diese Aufgabe wird durch eine Fahrzeugeinzelradaufhängung der eingangs genannten Art gelöst, bei der der Längslenker in Querrichtung biegeweich, in Vertikalrichtung hingegen biegesteif ausgebildet ist, und weiterhin mit einer Spurstange gelenkig gekoppelt ist, die ihrerseits mit einem anderen Ende an dem Fahrzeugaufbau abgestützt ist.

Damit kann die fahrzeugseitige Abstützung des vorderen Endes des Längslenkers über ein elastisches Zwischenglied erfolgen, das weicher ausgebildet ist, als herkömmliche Gummilager. Die hieraus resultierenden, größeren Längsfederungsamplituden, die zu einer verstärkten Vorspurveränderung führen würden, werden durch die biegeelastische Ausbildung des Längsträgers kompensiert, wobei die Spurstange für die Einhaltung einer gewünschten Vorspuränderung, beispielsweise beim Bremsen, sorgt, hingegen unerwünschte Spuränderungen infolge von Federungseffekten unterdrückt. Durch die weichere Ausbildung der Anlenkung des Längslenkers an den Fahrzeugaufbau läßt sich die Übertragung von Radschwingungen auf denselben vermindern, so daß der Fahrkomfort im Hinblick auf die körperlich wahrnehmbaren mechanischen Schwingungen sowie das von den Rädern erzeugte Fahrgeräusch verbessert wird. Überdies zeichnet sich die erfindungsgemäße Lösung durch eine hohe räumliche Kompaktheit aus, da sowohl der Längslenker, der Querlenker wie auch die Spurstange vergleichsweise kurz gehalten werden können.

In einer vorteilhaften Ausgestaltung der Erfindung ist der Querlenker scharnierartig an dem Längslenker befestigt. Neben der Funktion der Sturzmomentabstützung, die sich aus der im wesentlichen vertikalen Anbindung ergibt, erlaubt die scharnierartige Ausbildung eine Verminderung der Verzwängung der fahrzeugseitigen Lager der Lenker.

Vorzugsweise ist der Querlenker fest mit dem Längslenker verbunden, wobei die Elastizität der Anbindung aus der konstruktiv geometrischen Ausgestaltung der Verbindungsstelle resultiert. Beispielsweise können der Querlenker und der Längslenker miteinander verschweißt sein, so daß beide als Einheit vorgefertigt werden können und der Montageaufwand gering bleibt.

Zur gezielten Einstellung der Biegenachgiebigkeit des Längslenkers weist dieser eine sich im wesentlichen vertikal erstreckende Scharniersäule auf, von der sich ein erster Längslenkerabschnitt in Fahrtrichtung nach vorne und ein zweiter Längslenkerabschnitt zu der Spurstange erstreckt, wobei der erste Längslenkerabschnitt in Querrichtung biegeweich und in Vertikalrichtung biegesteif ausgebildet ist. Damit kann im Bereich der Spurstange zur Spurführung eine biegesteife Ausgestaltung beibehalten werden, ohne daß es hierdurch bei einem Federn des Längslenkers zu einer unerwünschten Vorspuränderung kommt. Die Biegenachgiebigkeit wird dabei im wesentlichen durch den in Fahrtrichtung vorne liegenden, ersten Längslenkerabschnitt bewirkt. Der zweite Längslenkerabschnitt kann dabei auch in einen scharniernahen Bereich des ersten Längslenkerabschnittes integriert werden.

In einer weiteren, vorteilhaften Ausgestaltung sind beide Längslenkerabschnitte als dreieckförmige Flügel ausgebildet, die mit einer Längsseite in im wesentlichen vertikaler Ausrichtung mit der Scharniersäule verbunden sind, wobei der erste, vordere Längslenkerabschnitt mit seinem spitzen Ende fahrzeugseitig abgestützt ist und der zweite Längslenkerabschnitt an einem Ende der Spurstange gelagert ist. Damit bleibt der Raumbedarf für den Längslenker in Querrichtung der betreffenden Radachse außerordentlich gering. Die Herstellung kann beispielsweise als Schweißteil erfolgen, wobei die dreieckförmigen Flügel jeweils als einfach stanzbare Blechteile ausgebildet sind.

Aus den gleichen Gründen wird der Querlenker bevorzugt als dreieckförmiger Flügel mit im wesentlichen gleichbleibender Wanddicke ausgebildet, der an einer Längsseite mit der Scharniersäule verbunden ist und an seinem spitzen Ende fahrzeugseitig abgestützt ist.

Um ein unkontrolliertes Biegeverhalten der Radaufhängung zu vermeiden, beträgt die Wanddicke des sowohl in Querrichtung als auch in Vertikalrichtung biegesteifen Querlenkers ein Mehrfaches, mindestens das Doppelte, der Wanddicke des ersten Längslenkerabschnittes.

In einer weiteren, vorteilhaften Ausgestaltung der Erfindung ist der zweite Längslenkerabschnitt in Fahrtrichtung kürzer, als der erste Längslenkerabschnitt. Damit bleibt der in bezug auf die Fahrtrichtung zwischen der Scharniersäule und der radseitigen Spurstangenanbindung liegende Abschnitt biegesteifer, als der erste Längslenkerabschnitt, der demzufolge ein großes Verformungspotential zum Ausgleich einer unerwünschten Vorspuränderung besitzt.

Vorzugsweise ist das Radlager in bezug auf die Fahrtrichtung hinter der Scharniersäule angeordnet. Hierdurch kann das Quer-Verformungspotential des Längsträgers beim Längsfedern desselben optimal ausgenutzt werden.

Die Schwenkachse des Spurstangenlagers des Längslenkers ist in einer weiter bevorzugten Ausgestaltung im wesentlichen horizontal und in Fahrtrichtung orientiert. Bei einer Längsfederung mit einer großen Amplitude kann damit die Vorspur des betreffenden Fahrzeugrades in der gewünschten Lage gehalten werden, wobei gleichzeitig ein vertikales Federn des Rades möglich ist und im wesentlichen ohne Einfluß auf die Vorspur bleibt.

Die Erfindung wird nachfolgend anhand von in der Zeichnung dargestellten Ausführungsbeispielen näher erläutert. Die Zeichnung zeigt in
- Figur 1: eine räumliche Ansicht einer Fahrzeugeinzelradaufhängung eines ersten Ausführungsbeispiels nach der Erfindung,
- Figur 2: eine Seitenansicht des ersten Ausführungsbeispiels in Richtung der Radinnenseite,
- Figur 3: eine Ansicht von hinten auf die Fahrzeugeinzelradaufhängung nach Figur 1,
- Figur 4: eine Ansicht von oben auf eine Fahrzeugeinzelradaufhängung eines zweiten Ausführungsbeispiels nach der Erfindung,
- Figur 5: eine Seitenansicht des zweiten Ausführungsbeispiels in Richtung der Radinnenseite, und in
- Figur 6: eine Ansicht von hinten auf die Fahrzeugeinzelradaufhängung nach Figur 4.

Das erste Ausführungsbeispiel zeigt eine Fahrzeugradaufhängung am Beispiel einer Einzelradaufhängung eines Hinterrades 17 für einen Personenkraftwagen.

Zur Aufhängung des Hinterrades 17 ist zunächst ein Längslenker 1 vorgesehen, an dem ein Radlager 4 für das Hinterrad 17 unmittelbar und ohne Zwischenschaltung eines weiteren Radträgers angekoppelt ist. In dem dargestellten Ausführungsbeispiel ist das Hinterrad 17 nicht angetrieben. Jedoch kann auch ein Antrieb des Hinterrades 17 erfolgen, indem beispielsweise zusätzlich eine kardanische, mit einem Antriebstrang gekoppelte Antriebswelle in dem Radlager 4 gelagert wird.

Der Längslenker 1 ist mit seinem in Fahrtrichtung F vorne liegenden Ende an einem Abschnitt eines Fahrzeugaufbaus über ein elastisches Zwischenglied, beispielsweise ein Gummilager in Form einer Gummibuchse, um eine Achse E1 schwenkbar gelagert. Die Achse E1 verläuft horizontal etwas unterhalb der Höhe der Radmittelachse M und quer zur Fahrtrichtung F.

Weiterhin greift an dem Längslenker 1 ein Querlenker 2 an, der ebenfalls über ein elastisches Zwischenglied, das wiederum ein Gummilager sein kann, um eine Achse E2 schwenkbar an einem weiteren Abschnitt des Fahrzeugaufbaus gelagert ist. Die Achse E2 verläuft im wesentlichen in Fahrtrichtung F. Sie ist in Fahrtrichtung F etwas nach unten und zur Radseite geneigt.

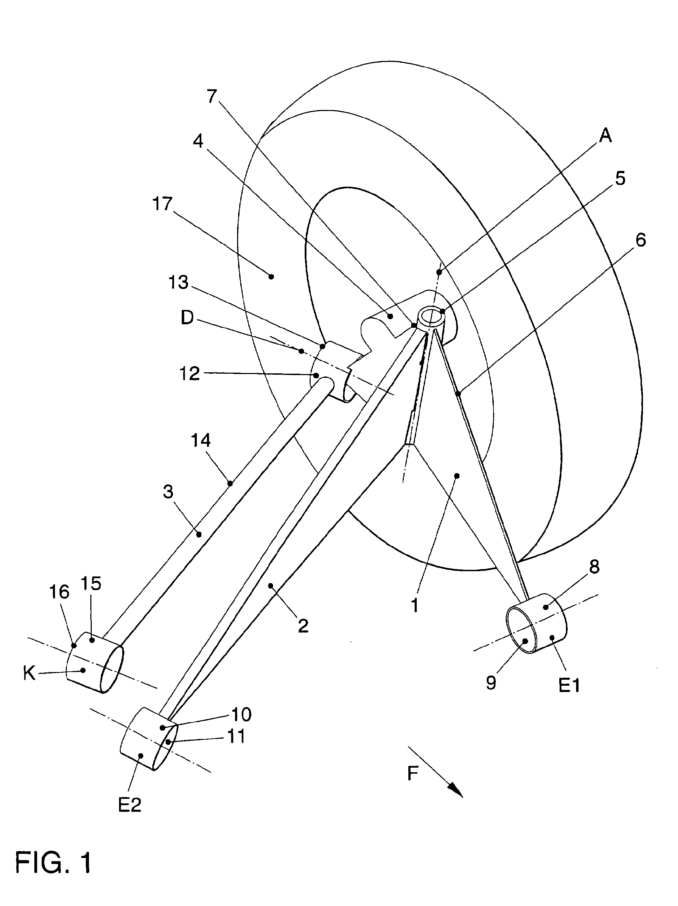

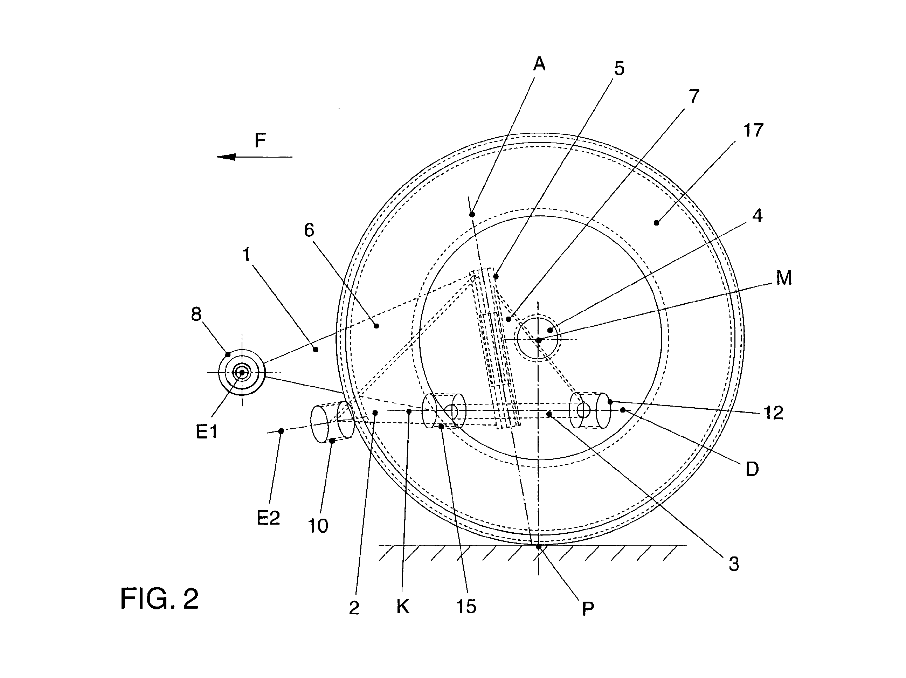

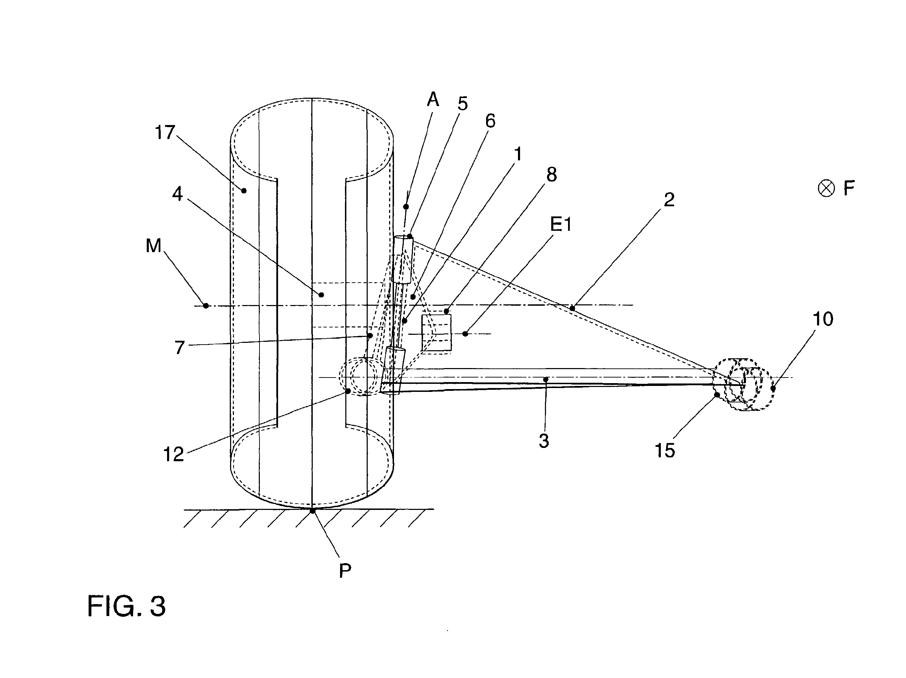

An dem in Fahrtrichtung F hinten liegenden Ende ist der Längslenker 1 mit einer sich im wesentlichen horizontal erstreckenden Spurstange 3 gekoppelt, welche wiederum gegen den Fahrzeugaufbau abgestützt ist. Dabei ist sowohl zwischen dem einen Ende der Spurstange 3 und dem Längslenker 1 als auch dem weiteren Ende der Spurstange 3 und dem Fahrzeugaufbau ein elastisches Zwischenglied, beispielsweise in Form einer Gummibuchse, vorgesehen, das eine schwenkbare Anlenkung um die in den Figuren 1 bis 3 dargestellten Achsen D und K erlaubt.

Der Längslenker 1 weist eine sich im wesentlichen vertikal erstreckende Scharniersäule 5 auf, die in dem ersten Ausführungsbeispiel als Hohlwelle ausgebildet ist. An diese Scharniersäule 5 schließt in Fahrtrichtung F nach vorne ein erster Längslenkerabschnitt 6 an, sowie weiterhin ein zweiter Längslenkerabschnitt 7, welcher sich zu der Spurstange 3 nach hinten erstreckt. Dabei ist der hintere, zweite Längslenkerabschnitt 7 in Fahrtrichtung F kürzer, als der erste Längslenkerabschnitt 6. In dem dargestellten Ausführungsbeispiel beträgt die Länge des zweiten Längslenkerabschnittes 7 weniger als die Hälfte der Länge des ersten Längslenkerabschnittes 6.

Wie insbesondere aus Figur 1 weiter zu erkennen ist, sind beide Längslenkerabschnitte 6 und 7 jeweils als dreieckförmige Flügel mit jeweils gleichbleibender, hier aber untereinander verschiedener Wanddicke ausgebildet. Der zweite Längslenkerabschnitt 7 ist dicker als der erste Längslenkerabschnitt 6. Die hochkant angeordneten, dreieckförmigen Flügel schließen jeweils mit einer Längsseite in im wesentlichen vertikaler Ausrichtung an die Scharniersäule 5 an, um nicht nur eine Kraft- sondern auch eine Momentabstützung zu gewährleisten. Dabei ist der vordere Längslenkerabschnitt 6 mit seinem spitzen Ende fahrzeugseitig abgestützt, wohingegen der zweite Längslenkerabschnitt 7 an einem Ende der Spurstange 3 gelagert ist. Hierzu ist an dem vorderen, ersten Längslenkerabschnitt 6 eine Buchse 8 mit einer Durchgangsöffnung 9 konzentrisch zu der Achse E1 vorgesehen, die mit dem bereits erwähnten elastischen Zwischenglied zusammenwirkt. Der hintere, zweite Längslenkerabschnitt 7 ist hingegen in einer an der Spurstange 3 vorgesehenen Buchse 12 bzw. in deren Durchgangsöffnung 13 gelagert.

Der hintere, zweite Längslenkerabschnitt 7 ist sowohl in Querrichtung als auch in Vertikalrichtung biegesteif ausgebildet. Hingegen ist der erste Längslenkerabschnitt 6 in Querrichtung biegeweich und lediglich in Vertikalrichtung biegesteif ausgeführt, beispielsweise indem dieser eine deutlich geringere Wanddicke aufweist, als der zweite Längslenkerabschnitt 7. Damit wird im Bereich des Radlagers 4 eine biegesteife Struktur zur Führung des Hinterrades 17 mit einer vorgegebenen Vorspur geschaffen, die in Fahrtrichtung F biegeelastisch an einem Fahrzeugaufbau um eine im wesentlichen horizontale Achse E1 schwenkbar gelagert ist, wobei der erste Längslenkerabschnitt 6 in Querrichtung in der Art einer Membranfeder oder Blattfeder wirkt.

Die Stabilisierung des Längslenkers 1 in Fahrzeugquerrichtung erfolgt durch den bereits erwähnten Querlenker 2, der in überwiegend vertikaler Ausrichtung zur Abstützung eines Sturzmomentes entlang einer geraden Linie bzw. Scharnierachse A mit dem Längslenker 1 verbunden ist. Die Ankopplung erfolgt dabei an der Scharniersäule 5 zwischen dem ersten Längslenkerabschnitt 6 und dem zweiten Längslenkerabschnitt 7, wobei in einer Ansicht von oben der Querlenker 2 mit dem ersten Längslenkerabschnitt 6 einen Winkel von weniger als 90 Grad, bevorzugt einen Winkel in einem Bereich von 60 bis 80 Grad einschließt. Der zweite Längslenkerabschnitt 6 liegt im wesentlichen in einer gemeinsamen Ebene mit dem ersten Längslenkerabschnitt 7. In dem ersten Ausführungsbeispiel ist die Scharnierachse A bei Betrachtung von oben nach unten etwas zur Radseite ausgestellt sowie gegen die Fahrtrichtung F geneigt. Die Scharnierachse A schneidet die Oberfläche einer Fahrbahn in Fahrtrichtung F vor oder auf Höhe des Radaufstandspunktes P. Folglich ist hier das Radlager 4 in bezug auf die Fahrtrichtung F hinter der Scharniersäule 5 und insbesondere hinter der Scharnierachse A angeordnet.

Wie den Figuren 1 bis 3 weiterhin entnommen werden kann, ist auch der Querlenker 2 als dreieckförmiger Flügel mit gleichbleibender Wanddicke ausgebildet, der mit einer Längsseite mit der Scharniersäule 5 verbunden ist und an seinem spitzen Ende fahrzeugseitig schwenkbar abgestützt ist. Hierzu weist der Querlenker 2 an seinem spitzen Ende eine Buchse 10 mit einer Durchgangsöffnung 11 auf, die mit dem bereits erwähnten elastischen Zwischenelement zur fahrzeugseitigen Abstützung zusammenwirkt. Die Schwenkachse E2 der Buchse 10 verläuft, wie bereits erwähnt, im wesentlichen horizontal und in Fahrtrichtung F, womit auch eingeschlossen ist, daß diese gegenüber der Fahrtrichtung F leicht nach außen und unten geneigt sein kann. Wie der hintere, zweite Längslenkerabschnitt 7 ist auch der Querlenker 2 sowohl in Vertikalrichtung als auch in Querrichtung biegesteif ausgebildet. Die Wanddicke beträgt dabei ein Mehrfaches, mindestens das Doppelte und bevorzugt etwa das Zwei- bis Fünffache der Wanddicke des vorderen, ersten Längslenkerabschnittes 6.

Die Ankopplung des Querlenkers 2 an der Scharniersäule 5 des Längslenkers 1 ist scharnierartig ausgebildet, das heißt der Querlenker 2 ist hochkant mit dem Längslenker 1 verbunden, wobei die Verbindungslinie bzw. Scharnierachse A in dem dargestellten, ersten Ausführungsbeispiel im wesentlichen in Vertikalrichtung verläuft. Damit erfolgt durch den Querlenker 2 nicht nur eine Kraftabstützung, sondern auch eine Momentabstützung gegenüber dem Fahrzeugaufbau. Die Ankopplung kann dabei in der Form eines schwenkbaren, zweiteiligen Scharniers erfolgen. In dem dargestellten Ausführungsbeispiel ist jedoch der Querlenker 2 fest mit dem Längslenker 1 verbunden, wobei der Anbindung aufgrund ihrer Elastizität eine gewisse Schwenkbeweglichkeit innewohnt.

Beispielsweise kann der Querlenker 2 entlang der Verbindungslinie A mit der Scharniersäule 5 punktweise oder durchgehend verschweißt werden, so daß sich der Längslenker 1 mit dem Querlenker 2 als einstückiges Bauteil darstellt, das auch insgesamt als Schweißkonstruktion ausgeführt werden kann. In diesem Fall sind die dreieckförmigen Abschnitte als Blechstanzteile ausgebildet, an welche die Scharniersäule 5 sowie die Buchsen 8 bzw. 10 angeschweißt werden. Allerdings kann die Baueinheit aus dem Längslenker 1 und dem Querlenker 2 auch als Gußteil hergestellt werden.

Die Spurstange 3 greift an dem hinteren Ende des Längslenkers 1 an und verläuft im wesentlichen parallel zu dem Querlenker 2. Die beiden axialen Enden der Spurstange 3 sind jeweils als Buchse 12 bzw. 15 mit einer Durchgangsöffnung 13 bzw. 16 ausgebildet, um jeweils entsprechend ein elastisches Zwischenelement aufzunehmen, über das die um eine Achse D bzw. K schwenkbare Ankopplung an den Fahrzeugaufbau bzw. den Längslenker 1 erfolgt. Dabei ist die Schwenkachse D des Spurstangenlagers des Längslenkers 1 im wesentlichen horizontal und in Fahrtrichtung F orientiert. Die Buchsen 12 und 15 sind über ein stabartiges Verbindungselement 14 miteinander gekoppelt, wobei die genannten Elemente 12, 14, 15 bevorzugt einstückig miteinander ausgebildet sind.

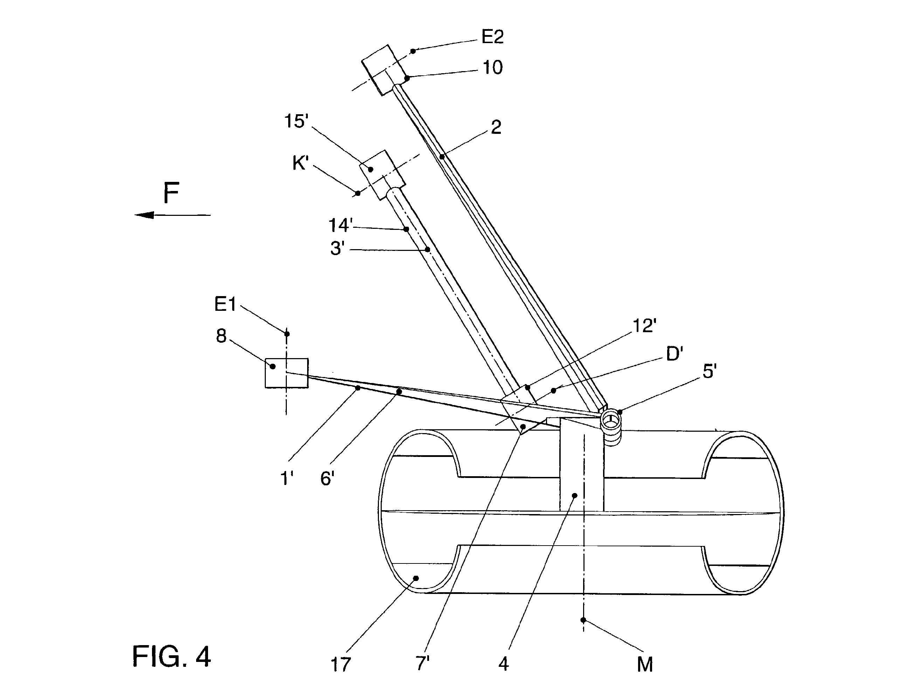

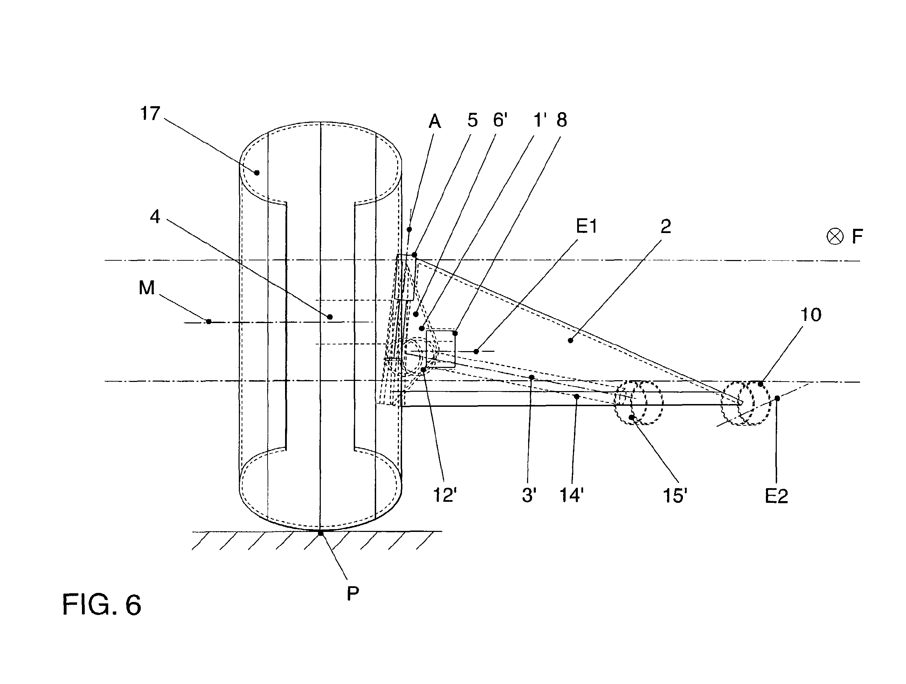

Ein zweites Ausführungsbeispiel wird nun mit Bezug auf die Figuren 4 bis 6 erläutert. Dieses unterscheidet sich von dem ersten Ausführungsbeispiel nach den Figuren 1 bis 3 vor allem durch die Anordnung der Spurstange 3' zu dem Längslenker 1' sowie die Anordnung der Scharnierachse A' zu dem Radlager 4, während der prinzipielle Aufbau beibehalten ist. So bleibt beispielsweise die Lage der Buchsen 8 und 10 sowie der Achsen E1 und E2 in bezug auf die Radmittelachse M unverändert. Im folgenden werden daher lediglich die Unterschiede näher beschrieben.

Der Längslenker 1' des zweiten Ausführungsbeispiels umfaßt einen sich im wesentlichen nach vorne erstreckenden ersten Abschnitt 6' der an seinem vorderen Ende eine Buchse 8 mit einer Achse E1 zur schwenkbaren Lagerung an einem Fahrzeugaufbau aufweist, wobei die Anbindung wiederum über eine Gummibuchse erfolgen kann. Der erste Längslenkerabschnitt 6' ist in Querrichtung biegeelastisch. In einem scharniernahen Bereich ist in den ersten Längslenkerabschnitt 6' ein biegesteifer zweiter Längslenkerabschnitt 7' integriert, der als Aufnahme für die Spurstange 3' ausgebildet ist. Die Spurstange 3' weist an ihrem radseitigen Ende eine Buchse 12' zur schwenkbaren Ankopplung um eine Achse D' auf. Die Buchse 12' ist dabei teilweise in einer Ausnehmung des Längsträgers 1' aufgenommen. Die Anbindung erfolgt in Fahrtrichtung F vor der Radmittelachse M.

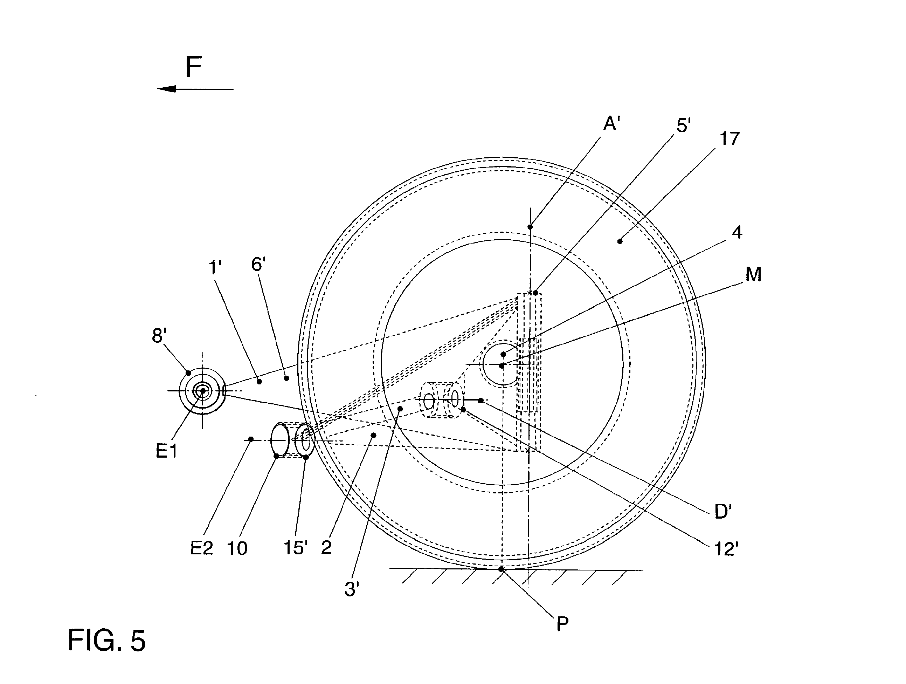

In Unterschied zu dem ersten Ausführungsbeispiel liegt die Scharniersäule 5' hinter dem Radlager 4, wobei die Scharnierachse A ebenfalls hinter dem Radaufstandspunkt P die Fahrbahnoberfläche schneidet, wie dies insbesondere aus Figur 5 zu erkennen ist.

An der Scharniersäule 5 ist wiederum der Querlenker 2 angekoppelt, der unter Beibehaltung der fahrzeugseitigen Anlenkpunkte etwas länger ausgebildet ist und unter einem spitzeren Winkel zu dem Längslenker 1' an der Scharniersäule 5' angreift. Der Querlenker 2 erstreckt sich im wesentlichen parallel zu der Spurstange 3', die raumsparend in dem spitzen Winkel zwischen dem Querlenker 2 und dem Längslenker 1' liegt. Die fahrzeugseitigen Buchsen 10 und 15' des Querlenkers 2 und der Spurstange 3' liegen auf gleicher Höhe über dem Boden und quer zur Fahrtrichtung F auf einer gemeinsamen Linie.

Mit den vorstehend beschriebenen Fahrzeugeinzelradaufhängungen kann die fahrzeugseitige Abstützung des vorderen Endes des Längslenkers 1 besonders weich ausgebildet werden, das heißt weicher, als beispielsweise bei der Fahrzeugeinzelradaufhängung, welche aus der EP 0 691 225 A1 bekannt ist. Damit kann eine große Längsfederung zugelassen werden, ohne die Vorspur negativ zu beeinflussen. Die durch das vordere elastische Lager des Längslenkers 1 beispielsweise bei einem Bremsvorgang verursachte Längsamplitude wird durch die Querelastizität des ersten Längslenkerabschnittes 6 bzw. 6' kompensiert, der sich hierzu entsprechend biegt. Die Spurstange 3 in Zusammenwirkung mit dem starren Hinterbau des Längslenkers 1 sorgt dabei für die Einhaltung einer vorgegebenen, gewünschten Vorspur an dem Hinterrad 17. Insgesamt läßt sich damit eine Komfortverbesserung der Radaufhängung erzielen, da die auf den Fahrzeugaufbau übertragenen Schwingungen stärker absorbiert werden können, ohne daß dies auf Kosten der Fahrstabilität ginge.

Neben einer flachen Bauweise zeichnet sich die Fahrzeugeinzelradaufhängung überdies durch ein geringes Gewicht und eine einfache Herstellbarkeit aus.

### BEZUGSZEICHENLISTE

- 1,1': Längslenker
- 2: Querlenker
- 3, 3': Spurstange
- 4: Radlager
- 5, 5': Scharniersäule
- 6, 6': erster Längslenkerabschnitt
- 7, 7': zweiter Längslenkerabschnitt
- 8: Buchse des ersten Längslenkerabschnittes
- 9: Durchgangsöffnung
- 10, 10': fahrzeugseitige Buchse des Querlenkers
- 11: Durchgangsöffnung
- 12, 12': längslenkerseitige Buchse der Spurstange
- 13, 13': Durchgangsöffnung
- 14. 14': Verbindungsabschnitt
- 15, 15': fahrzeugseitige Buchse der Spurstange
- 16: Durchgangsöffnung
- 17: Hinterrad
- A, A': Scharnierachse, Verbindungslinie zwischen Querlenker und Scharniersäule
- E1: Schwenkachse der Längslenker-Buchse 8
- E2: Schwenkachse der Querlenker-Buchse 10
- K, K': Schwenkachse der fahrzeugseitigen Buchse der Spurstange
- D, D': Schwenkachse der längslenkerseitigen Buchse der Spurstange
- M: Radmittelachse
- P: Radaufstandspunkt

## Patentansprüche

1. Fahrzeugeinzelradaufhängung, umfassend einen Längslenker (1, 1') mit einem Radlager (4), der mit einem ersten, vorderen Ende über ein elastisches Lager schwenkbar an einem Fahrzeugaufbau abgestützt ist, und einen Querlenker (2), der in überwiegend vertikaler Ausrichtung zur Abstützung eines Sturzmomentes an zumindest zwei voneinander beabstandeten Punkten entlang einer Achse (A, A') mit dem Längslenker (1, 1') verbunden ist, **dadurch gekennzeichnet,** daß der Längslenker (1, 1') in Querrichtung biegeweich, in Vertikalrichtung hingegen biegesteif ausgebildet ist, und weiterhin mit einer Spurstange (3, 3') gelenkig gekoppelt ist, die ihrerseits mit einem anderen Ende an dem Fahrzeugaufbau abgestützt ist.

2. Fahrzeugeinzelradaufhängung nach Anspruch 1, **dadurch gekennzeichnet,** daß der Querlenker (2) scharnierartig an dem Längslenker (1, 1') befestigt ist.

3. Fahrzeugeinzelradaufhängung nach Anspruch 1 oder 2, **dadurch gekennzeichnet**, daß der Querlenker (2) fest mit dem Längslenker (1, 1') verbunden ist.

4. Fahrzeugeinzelradaufhängung nach einem der Ansprüche 1 bis 3, **dadurch gekennzeichnet,** daß der Längslenker (1) eine sich im wesentlichen vertikal erstreckende Scharniersäule (5, 5') aufweist, von der sich ein erster Längslenkerabschnitt (6, 6') in Fahrtrichtung (F) nach vorne und ein zweiter Längslenkerabschnitt (7, 7') zu der Spurstange (3, 3') erstreckt, wobei der erste Längslenkerabschnitt (6, 6') in Querrichtung biegeweich und in Vertikalrichtung biegesteif ausgebildet ist.

5. Fahrzeugeinzelradaufhängung nach Anspruch 4, **dadurch gekennzeichnet,** daß beide Längslenkerabschnitte (6, 6', 7, 7') als dreieckförmige Flügel ausgebildet sind, die mit einer Längsseite in im wesentlichen vertikaler Ausrichtung mit der Scharniersäule (5, 5') verbunden sind, wobei der erste Längslenkerabschnitt (6, 6') mit seinem spitzen Ende fahrzeugseitig abgestützt ist und der zweite Längslenkerabschnitt (7, 7') an einem Ende der Spurstange (3, 3') schwenkbar gelagert ist.

6. Fahrzeugeinzelradaufhängung nach Anspruch 4 oder 5, **dadurch gekennzeichnet,** daß der Querlenker (2) als dreieckförmiger Flügel mit gleichbleibender Wanddicke ausgebildet ist, der an einer Längsseite mit der Scharniersäule (5, 5') verbunden ist und an seinem spitzen Ende fahrzeugseitig abgestützt ist.

7. Fahrzeugeinzelradaufhängung nach einem der Ansprüche 4 bis 6, **dadurch gekennzeichnet,** daß die Wanddicke des sowohl in Querrichtung als auch in Vertikalrichtung biegesteifen Querlenkers (2) ein Mehrfaches der Wanddicke des ersten Längslenkerabschnittes (6, 6') beträgt.

8. Fahrzeugeinzelradaufhängung nach einem der Ansprüche 4 bis 7, **dadurch gekennzeichnet,** daß der zweite Längslenkerabschnitt (7, 7') in Fahrtrichtung kürzer ist, als der erste Längslenkerabschnitt (6, 6').

9. Fahrzeugeinzelradaufhängung nach einem der Ansprüche 4 bis 8, **dadurch gekennzeichnet,** daß das Radlager (4) in bezug auf die Fahrtrichtung (F) zwischen der Scharniersäule (5, 5') und der radseitigen Spurstangenanbindung angeordnet ist.

10. Fahrzeugeinzelradaufhängung nach einem der Ansprüche 1 bis 9, **dadurch gekennzeichnet,** daß die Schwenkachse (D, D') des Spurstangenlagers des Längslenkers (1, 1') im wesentlichen horizontal und in Fahrtrichtung (F) orientiert ist.
